# EUROPÄISCHE PATENTANMELDUNG

(11) **EP 1 516 820 A2**
(43) Veröffentlichungstag der Anmeldung: **23.03.2005**
(21) Anmeldenummer: 04090346.0
(22) Anmeldetag: 09.09.2004
(51) Int. Cl.: B65B 57/04

(54) **Vorrichtung und Verfahren zum Erkennen und Ausschleusen von Fehlverpackungen**

(30) Priorität: 19.09.2003 DE 10343984
(71) Anmelder: Konstrukta, Ingenieurgesellschaft für Sondermaschinenbau mbH, 13088 Berlin (DE)
(72) Erfinder: Krüger, Stefan, Dipl.-Ing., 13086 Berlin (DE); Michel, Rüdiger, Dipl.-Ing., 12587 Berlin (DE); Simon, Walter, Dr., 12587 Berlin (DE)
(74) Vertreter: Hannig, Wolf-Dieter, Dipl.-Ing.

(57) **Zusammenfassung**

Die Erfindung betrifft eine Vorrichtung und ein Verfahren zum Erkennen und Ausschleusen von Fehlverpackungen, insbesondere durch eine Verpackungsmaschine nicht getrennte Schlauchbeutel einer mit Bonbons gefüllten Schlauchbeutelkette.

Der Erfindung liegt die Aufgabe zugrunde, Fehlverpackungen bei hohen Verarbeitungsgeschwindigkeiten sicher zu identifizieren und aus dem Verarbeitungsprozess gezielt auszuschleusen, ohne dass dieser unterbrochen werden muss.

Gelöst wird diese Aufgabe dadurch, dass den vereinzelten Schlauchbeuteln (4) nach ihrem Verlassen der Siegelwalzen (1) eine zur Fördergeschwindigkeit zusätzliche, gezielte Beschleunigung so erteilt wird, dass sich der Abstand zwischen zwei aufeinanderfolgenden Schlauchbeuteln in einem Maß vergrößert, der ausreichend ist, um den Anfang und das Ende eines jeden Schlauchbeutels mit optoelektronischen Mitteln (18,19,20) bei hohen bis sehr hohen Geschwindigkeiten zu detektieren, Fehlverpackungen zu erkennen, in Signale und in Steuerbefehle umzusetzen, mit denen die identifizierte Fehlverpackung pneumatisch aus ihrer Bewegungsrichtung gebracht wird.

## Beschreibung

Die Erfindung betrifft eine Vorrichtung an Verpackungsmaschinen zum Erkennen und Ausschleusen von Fehlverpackungen, insbesondere durch eine Verpackungsmaschine nicht getrennte Schlauchbeutel einer mit Bonbons gefüllten Schlauchbeutelkette, mit einem den Siegelwalzen der Verpackungsmaschine zugeordneten, gegenüber der Drehgeschwindigkeit der Siegelwalzen mit Transportgeschwindigkeit umlaufenden endlosen Förderband und einem Ausstoßorgan.

Die Erfindung betrifft ferner ein Verfahren zum Erkennen und Ausschleusen von Fehlverpackungen, insbesondere durch eine Verpackungsmaschine nicht getrennte Schlauchbeutel einer mit Bonbons gefüllten Schlauchbeutelkette, bei dem die Schlauchbeutel einem endlos umlaufenden Förderband zugeführt, nicht getrennte Schlauchbeutel detektiert und aus der Kette ausgestoßen werden.

Aus der DE 27 10 435 A1 ist eine Vorrichtung an einer Verpackungsmaschine zum Überwachen, Zählen und Gruppieren von flachen Schlauchbeutelpackungen bekannt, die taktweise, in Abständen, liegend angeliefert und in abgezählten Gruppen stehend einer weiteren Bearbeitungsstation zugeführt werden, wobei fehlerhafte Packungen ausgeschieden werden. Längs einer ersten Förderstrecke, auf der die Packungen in Abständen zulaufen, sind mindestens ein Ausscheidungsorgan für fehlerhafte Packungen sowie ein Zählorgan für die einwandfreien Packungen angeordnet. Das Ausscheidungsorgan an der ersten Förderstrecke ist eine seitliche, quer zur Förderstrecke gerichtete Düse mit kontinuierlichem oder intermittierenden Luftstrom zugeordnet, um leere Packungen seitlich wegzublasen.
Nicht vollständig voneinander getrennte Packungen werden an der ersten Förderstrecke durch einen quer zur Förderstrecke gerichteten, in die Abstände einzelner Packungen eingreifenden Ausscheideschieber ausgestoßen.

Dieser bekannte Stand der Technik mag für geringe Verarbeitungsgeschwindigkeiten noch ausreichend sein. Für den Fall, dass die vereinzelten Packungen nahezu keinen Abstand voneinander haben und das Erkennen und Ausschleusen fehlerhafter Packungen im Hochgeschwindigkeitsbereich, beispielsweise Taktzeiten unter 50 Millisekunden, durchgeführt werden muss, ist diese Lösung nicht mehr geeignet.
Nichtausreichend getrennte Verpackungen verursachen deshalb bei hohen Verarbeitungsgeschwindigkeiten oftmals Störungen im Verpackungsprozess und führen zu unverhältnismäßig hohem Ausschuss.

Bei diesem Stand der Technik liegt der Erfindung die Aufgabe zugrunde, Fehlverpackungen bei hohen Verarbeitungsgeschwindigkeiten trotz auftretender Streuung sicher zu identifizieren und aus dem Verarbeitungsprozess gezielt auszuschleusen, ohne dass dieser unterbrochen werden muss.

Diese Aufgabe wird durch die Merkmale des Anspruches 1 und dem nebengeordneten Anspruch 9 gelöst.
Vorteilhafte Ausgestaltungen des erfindungsgemäßen Verfahrens und der Vorrichtung sind den Unteransprüchen entnehmbar.

Die erfindungsgemäße Lösung zeichnet sich dadurch aus, dass die separierten Schlauchbeutel nach ihrem Verlassen aus den Siegelwalzen eine gezielte Beschleunigung erfahren, so dass sich der Abstand zwischen zwei aufeinanderfolgenden Schlauchbeuteln vergrößert, der ausreichend ist, um den Anfang und das Ende eines jeden Schlauchbeutels mit optoelektronischen Mitteln bei hohen bis sehr hohen Geschwindigkeiten zu detektieren, Fehlverpackungen zu erkennen, in Signale und in Steuerbefehle umzusetzen, mit denen die identifizierte Fehlverpackung pneumatisch aus ihrer Bewegungsrichtung gebracht wird.
Die gezielte Beschleunigung wird durch eine Erhöhung der Geschwindigkeit der einzelnen Schlauchbeutel auf einer Förderstrecke erreicht, indem Andruckrolle und Förderstrecke des Förderbandes ein Wirkpaar bilden, das den Schlauchbeuteln eine gegenüber den Siegelwalzen um das 2- bis 4fach höhere Geschwindigkeit erteilt. Der Schlauchbeutel wird in Richtung der Längsachse des Förderbandes auf einer geradlinigen Bahn bewegt, wobei dem Schlauchbeutel innerhalb der Förderstrecke mittels eines Niederhalters eine mit der Bewegungsrichtung des Förderbandes übereinstimmende Bewegungsrichtung aufgezwungen wird.

Trotz der hohen Verarbeitungsgeschwindigkeit mit Taktzeiten unter 50 Millisekunden werden auftretende Seitenstreuungen der Schlauchbeutel erkannt und Fehlverpackungen sicher identifiziert und ausgeschleust.
Ein weiterer Vorteil der erfindungsgemäßen Lösung besteht darin, dass ihr Aufbau einfach, robust und servicefreundlich ist. Sie lässt sich komplikationslos in vorhandene Hochleistungsverpackungsmaschinen integrieren.

Die Erfindung ist insbesondere für den Verpackungsmaschinensektor geeignet.

Die Erfindung soll nachstehend an einem Ausführungsbeispiel näher erläutert werden.

Es zeigen:
- Fig. 1: eine Prinzipdarstellung der erfindungsgemäßen Vorrichtung mit separierten Schlauchbeutel,
- Fig. 2: eine Prinzipdarstellung der erfindungsgemäßen Vorrichtung mit Fehlverpackung,

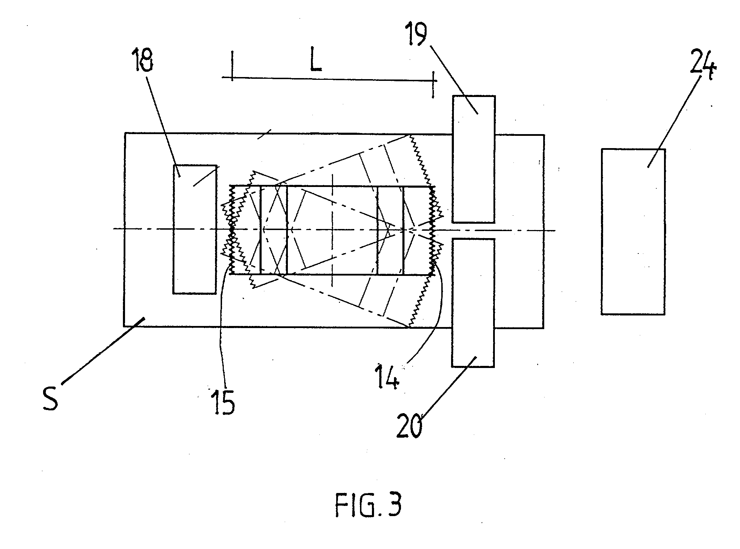

- Fig. 3: eine Veranschaulichung der Streuung der Schlauchbeutel während des Transportes auf der Förderstrecke und
- Fig. 4: ein Flussdiagramm zum Ablauf des erfindungsgemäßen Verfahrens.

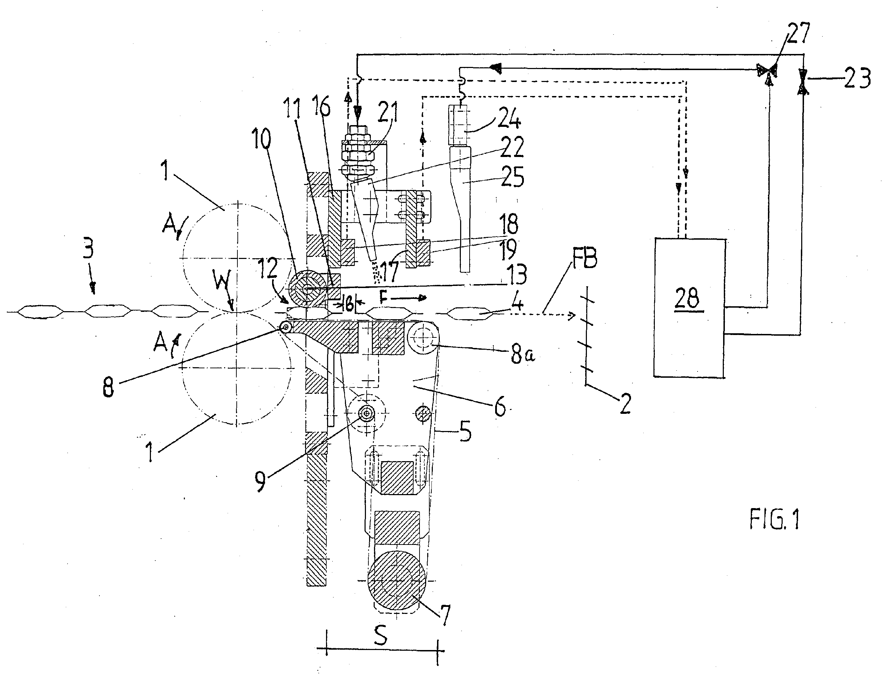

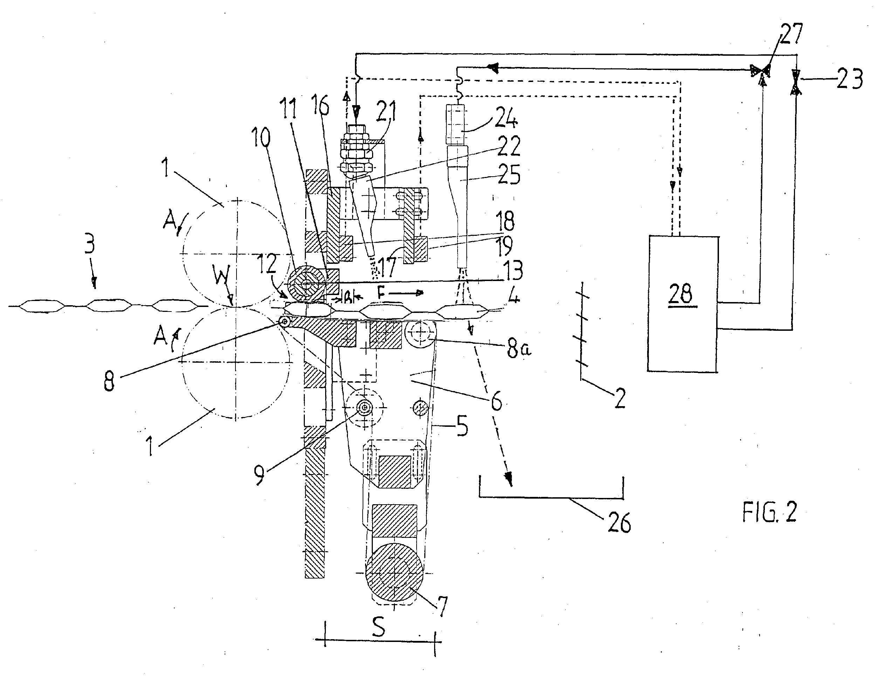

Fig. 1 und 2 zeigen den grundsätzlichen Aufbau der erfindungsgemäßen Vorrichtung, die in eine nur andeutungsweise dargestellte Hochleistungsverpackungsmaschine zur Verpackung von Bonbons in flachen Schlauchbeuteln zwischen den Siegelwalzen **1** und einem Vertikalförderer **2** montiert ist. Die Schlauchbeutelkette **3** wird durch die Siegelwalzen **1** in einzelne Schlauchbeutelverpackungen **4** separiert und mit einem endlosem Förderband **5** dem Vertikalförderer **2** zugeführt. Das Förderband **5** ist so angeordnet, dass es in der Lage ist, die aus dem Walzenspalt **W** der Siegelwalzen **1** austretenden flachen Schlauchbeutelverpackungen **4** auf einer verhältnismäßig kurzen tischartigen, horizontalen Förderstrecke **S** aufzunehmen. Die das Förderband **5** aufnehmende Baueinheit ist kompakt ausgeführt und befindet sich in einem Gehäuse **6**, das den Antrieb **7** für das Förderband **5**, eine kleine, dem Walzenspalt **W** zugeordnete vordere Umlenkrolle **8,** eine hintere Umlenkrolle **8a** und einer Spannrolle **9** aufnimmt. Das Förderband **5** läuft in Antriebsrichtung **A** der Siegelwalzen **1** in einer gegenüber den Siegelwalzen **1** wesentlich höheren Geschwindigkeit um. Nahe der Austrittsöffnung des Walzenspaltes **W** der Siegelwalzen 1 ist eine Andruckrolle **10** an einem Träger **11** der erfindungsgemäßen Vorrichtung befestigt. Die Andruckrolle **10** ist quer zur Förderichtung **F** des Förderbandes **5** ausgerichtet und bildet mit dem Förderband **5** ein Wirkpaar mit einer Beschleunigungsöffnung **12**, die in ihrem Abstand vom Förderband **5** so bemessen ist, dass eine aus dem Walzenspalt **W** gelangende Schlauchbeutelverpackung **4** erfasst wird. Die Andruckrolle **10** hat einen separaten Antrieb **13**, der sicherstellt, dass die Andruckrolle **10** und das Förderband **5** mit einer gegenüber den Siegelwalzen **1** zwei- bis vierfach höheren Geschwindigkeit umläuft. Dadurch erhält die in der Beschleunigungsöffnung **12** von der Andruckrolle **10** jeweils erfasste Schlauchbeutelverpackung **4** eine signifikante Beschleunigung, so dass sich der Abstand der nahezu aneinander liegenden Enden **14** und **15** zweier auf der tischartigen Förderstrecke **S** des Förderbandes **5** in Kette liegenden Schlauchbeutelverpackungen **4** vergrößert.
Die Andruckrolle **10** kann mit einer aufgerauten, bürstenähnlichen oder gummierten Oberfläche zum besseren Erfassen der Schlauchbeutelverpackungen **4** versehen sein.
Am Träger **11** der erfindungsgemäßen Vorrichtung sind Halterungen **16** und **17** für die Befestigung von optoelektronischen Sensoren **18**, **19** und **20** montiert. Die Sensoren **18**, **19** und **20** sind so orientiert und ausgerichtet, dass sie in der Lage sind, den Anfang **14** und das Ende **15** der Schlauchbeutelverpackung **4** zu erfassen.
Der Sensor **18** und die Sensoren **19** und **20** haben einen Abstand voreinander, der etwa der Längsausdehnung **L** der Schlauchverpackung **4** entspricht. Die Sensoren **18**, **19** und **20** haben des weiteren einen gleichen Höhenabstand von der Förderstrecke **S** des Förderbandes **5**.
Der Sensor **18** liegt - wie Fig. 2 zeigt- etwa quer und mittig zur Förderstrecke **S** des Förderband **5**, die Sensoren **19** und **20** sind auf einer Achse quer zur Förderstrecke **S** des Förderbandes **5** ausgerichtet und überdecken die gesamte Breite des Förderbandes **5**, um eventuelle Streuungen bzw. Auslenkungen der Schlauchbeutelverpackungen **4** bei ihrer Längsbewegung mit dem Förderband **5** zu erfassen. Als Sensoren **18**, **19** und **20** sind optoelektronische Sensoren, vorzugsweise Infrarotsensoren, mit sichtbaren Licht arbeitende Sensoren, Lasersensoren o. dgl. geeignet.
Zwischen dem nahe der Andruckrolle **10** positionierten Sensor **18** und den beiden Sensoren **19** und **20** ist ein pneumatisch wirkender Niederhalter **21** befestigt, dessen Düse **22** kontinuierlich einen Druckluftstrahl auf die sich mit dem Förderband **5** bewegenden Schlauchbeutelverpackungen **4** lenkt. Der Druckluftstrahl überstreicht die gesamte Breite der tischartigen Förderstrecke **S** des Förderbandes **5** und hat eine solche Stärke, dass ein Abheben der Schlauchbeutelverpackungen **4** vom Förderband **5** sicher verhindert wird. Die Düse **22** ist verstellbar ausgeführt, damit der Auftreffwinkel des Druckluftstrahls entsprechend den erforderlichen Prozessparametern verändert werden kann. Der pneumatische Niederhalter **21** ist mit einer nicht dargestellten Druckluftquelle über ein Stellorgan **23** verbunden.

Sobald die auf der Förderstrecke **S** befindlichen vereinzelten Schlauchbeutelverpackungen **4** den Umlenkungsbereich des Förderbandes **5** an der Umlenkrolle **8a** verlassen, bewegen sich die Schlauchbeutelverpackungen auf Grund ihrer hohen Geschwindigkeit auf einer freien Flugbahn **F** in Richtung eines nur andeutungsweise gezeigten Vertikalförderers **2** weiter. Der Flugbahn **FB** ist ein pneumatischer Ausstoßer **24** zugeordnet, dessen Düse **25** so ausgerichtet ist, dass die aus der Düse **25** austretende Druckluft die identifizierte Fehlverpackung trifft, und aus ihrer Flugbahn **FB** zur Aufnahme in ein Behältnis **26** ablenkt. Die Düse **25** ist verschwenkbar ausgeführt, so dass der Ablenkungsstrahl den erforderlichen Gegebenheiten Rechnung tragen kann. Der pneumatische Ausstoßer **24** ist über ein Stellorgan **27** mit einer Druckluftquelle verbunden.
Die Sensoren **18**, **19** und **20** leiten ihre Signale zu einer Steuereinheit **28**, die nach Digitalisierung der Sensorsignale dieselben verarbeitet und das Stellorgan **27** zum Öffnen und Schließen der Gaszufuhr aus der Druckluftquelle ansteuert.

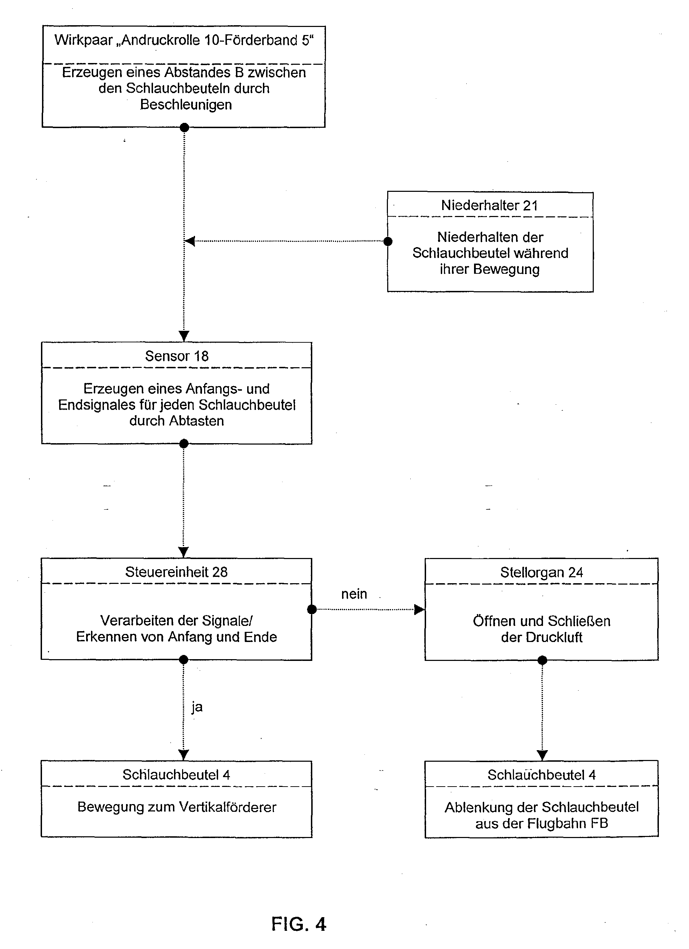

Fig. 4 verdeutlicht das Prinzip des erfindungsgemäßen Verfahrens, das an einer Hochleistungsverpackungsmaschine mit einer Verpackungsgeschwindigkeit von 30 Verpackungen pro Sekunde zur Anwendung kommen soll.

Die von den Siegelwalzen **1** kommenden Schlauchbeutelverpackungen **4** werden von der Andruckrolle **10** und dem Förderband **5** erfasst und gegenüber den Siegelwalzen **1** zusätzlich beschleunigt, wodurch sich der Abstand **B** der voneinander beabstandeten Enden **14** und **15** der in einer Kette liegenden Schlauchbeutelverpackungen **4** vergrößert. Die Sensoren **18**, **19** und **20** erfassen den Anfang **14** und das Ende **15** der Schlauchbeutelverpackungen **4** und geben diese Signale an die Steuereinheit **28** weiter, die feststellt, dass die entsprechende Schlauchbeutelverpackung **4** über ein Anfang und ein Ende verfügt. Das Stellorgan **27** bleibt für die Druckluftzufuhr geschlossen. Die Schlauchbeutelverpackungen **4** werden dem Vertikalförderer zugeführt. Sind zwei oder mehr Schlauchbeutelverpackungen **4** nicht ordnungsgemäß getrennt (siehe auch Fig. 2), kann der Sensor **18** kein Signal für das Ende der Schlauchbeutelverpackung **4** generieren. Die Steuereinheit **28** stellt fest, dass kein Signal für das Ende der Schlauchbeutelverpackung **4** vorhanden ist und gibt einen Steuerbefehl zum Öffnen des Stellorgans **27** aus. Das Stellorgan **27** öffnet und lenkt einen Druckluftstoß auf die identifizierten nicht getrennten Schlauchbeutelverpackungen **4**, wodurch letztere aus ihrer Flugbahn **FB** abgelenkt und in das Behältnis **26** ausgeschleust werden.

### Aufstellung der verwendeten Bezugszeichen

- Siegelwalzen: 1
- Vertikalförderer: 2
- Schlauchbeutelkette: 3
- Schlauchbeutelverpackung: 4
- Förderband: 5
- Gehäuse: 6
- Antrieb von 5: 7
- vordere Umlenkrolle: 8
- hintere Umlenkrolle: 8a
- Spannrolle: 9
- Andruckrolle: 10
- Träger: 11
- Beschleunigungsöffnung: 12
- Antrieb von 10: 13
- Anfang von 4: 14
- Ende von 4: 15
- Halterung: 16,17
- Sensoren: 18,19,20
- Niederhalter: 21
- Düse von 21: 22
- Stellorgan für 21: 23
- Ausstoßer: 24
- Düse von 24: 25
- Behältnis: 26
- Stellorgan für 24: 27
- Steuereinheit: 28
- Antriebsrichtung der Siegelwalzen: A
- Abstand: B
- Förderrichtung: F
- Flugbahn: FB
- Länge von 4: L
- Förderstrecke: S

## Patentansprüche

1. Vorrichtung an Verpackungsmaschinen zum Erkennen und Ausschleusen von Fehlverpackungen, insbesondere durch eine Verpackungsmaschine nicht getrennte Schlauchbeutel einer mit Bonbons gefüllten Schlauchbeutelkette, mit einem den Siegelwalzen der Verpackungsmaschine zugeordneten, gegenüber der Drehgeschwindigkeit der Siegelwalzen mit Transportgeschwindigkeit umlaufenden endlosen Förderband und einem Ausstoßorgan, **gekennzeichnet durch** folgende Merkmale:
a) eine separat angetriebenen Andruckrolle **(10)**, die mit dem Förderband **(5)** ein auf eine 2 bis- 4fach höhere Geschwindigkeit gegenüber den Siegelwalzen beschleunigbares Wirkpaar mit Beschleunigungsöffnung **(12)** für die voneinander abgetrennten Schlauchbeutel **(4)** bildet und nahe dem Walzenspalt **(W)** der Siegelwalzen **(1)** angeordnet ist,
b) einen Niederhalter **(21)** zum Andrücken der vereinzelten Schlauchbeutel auf einer Förderstrecke **(S)** während der Beschleunigung,
c) mindestens einen Sensor **(18)** zum Erfassen des Vorhandenseins eines Anfangs **(14)** und eines Endes **(15)** der vereinzelten Schlauchbeutel oder des Nichtvorhandenseins des Endes als Signal für die Fehlverpackung,
d) eine die Signale verarbeitende Steuereinheit **(28)** zum Betätigen des Ausstoßorgans **(24)** zwecks Ausschleusen der Fehlverpackung **durch** Verändern ihrer Bewegungsrichtung.

2. Vorrichtung nach Anspruch 1, **dadurch gekennzeichnet, dass** die Andruckrolle **(10)** eine bürstenähnliche, aufgeraute oder gummierte Oberfläche aufweist.

3. Vorrichtung nach Anspruch 1, **dadurch gekennzeichnet, dass** der Niederhalter **(21)** eine mit Druckluft betriebene Düse aufweist.

4. Vorrichtung nach Anspruch 1, **dadurch gekennzeichnet, dass** der Sensor **(18;19;20)** ein optoelektronischer Sensor ist.

5. Vorrichtung nach Anspruch 1 bis 4, **dadurch gekennzeichnet, dass** drei Sensoren **(18,19,20)** vorgesehen sind, wobei der Sensor **(18)** unmittelbar dem Anfang **(14)** der Schlauchbeutel und weitere zwei Sensoren **(19;20)** dem Ende der Schlauchbeutelverpackung **(4)** zugeordnet sind.

6. Vorrichtung nach Anspruch 1 bis 5, **dadurch gekennzeichnet, dass** die Sensoren **(18;19;20)** mit einer Steuereinheit **(28)** zum Verarbeiten der Sensorsignale verbunden sind.

7. Vorrichtung nach Anspruch 1 bis 6, **dadurch gekennzeichnet, dass** das Ausstoßorgan **(24)** mit einem Stellorgan **(27)** verbunden ist, das mit der Steuereinheit **(28)** zum Öffnen und Schließen des Stellorgans **(27)** in Verbindung steht.

8. Vorrichtung nach Anspruch 1 bis 7, **dadurch gekennzeichnet, dass** das Ausstoßorgan **(24)** eine mit Druckluft betriebene Düse aufweist.

9. Verfahren zum Erkennen und Ausschleusen von Fehlverpackungen, insbesondere durch eine Verpackungsmaschine nicht getrennte Schlauchbeutel einer mit Bonbons gefüllten Schlauchbeutelkette, bei dem die Schlauchbeutel einem endlos umlaufenden Förderband zugeführt, nicht getrennte Schlauchbeutel detektiert und aus der Kette ausgestoßen werden, **dadurch gekennzeichnet, dass** den vereinzelten Schlauchbeuteln nach ihrem Verlassen der Siegelwalzen eine zur Fördergeschwindigkeit gezielte Beschleunigung durch eine Erhöhung der Geschwindigkeit der einzelnen Schlauchbeutel mittels einer Drehzahlregelung der Andruckrolle auf das 2- bis 4fache der Geschwindigkeit der Siegelwalzen erteilt wird, wobei sich der Abstand zwischen zwei aufeinanderfolgenden Schlauchbeuteln in einem Maß vergrößert, der ausreichend ist, um den Anfang und das Ende eines jeden Schlauchbeutels mit optoelektronischen Mitteln bei hohen bis sehr hohen Geschwindigkeiten zu detektieren, Fehlverpackungen zu erkennen, in Signale und in Steuerbefehle umzusetzen, mit denen die identifizierte Fehlverpackung aus ihrer Bewegungsrichtung gebracht wird.

10. Verfahren nach Anspruch 9 **gekennzeichnet durch** folgende Schritte:
a) Erzeugen eines Abstandes **(B)** zwischen den vereinzelten Schlauchbeuteln **durch** das Beschleunigen der Schlauchbeutel entlang einer Förderstrecke **(S)** mittels der separat angetriebenen Anduckrolle,
b) Niederhalten der beschleunigten Schlauchbeutel nach Schritt a) auf dem Förderband,
c) Erzeugen eines Anfang- und Endsignales für jeden Schlauchbeutel **durch** ein optoelektronisches Abtasten des Anfanges und Endes der Schlauchbeutel und Zuführen dieser Signale zu einem Prozessor,
d) Feststellen des Vorhandenseins eines Anfangs- und Endsignals für den jeweiligen Schlauchbeutel als ein Maß für die ordnungsgemäße Trennung der Schlauchbeutel voneinander oder des Nichtvorhandenseins des Endsignals als ein Maß für das Vorliegen einer Fehlverpackung **durch** Verarbeiten dieser Signale im Prozessor,
e) Ansteuern einer mit Druckluft betriebenen Düse **durch** den Prozessor zum Ausschleusen der gemäß Schritt d) festgestellten Fehlverpackung aus der Schlauchbeutelkette.

11. Verfahren nach Anspruch 9 und 10, **dadurch gekennzeichnet, dass** der Durchmesser der Andruckrolle entsprechend der Art der Verpackung eingestellt wird.

12. Verfahren nach Anspruch 9 bis 11 **dadurch gekennzeichnet, dass** die Schlauchbeutel in Richtung der Längsachse des Förderbandes auf einer geradlinigen Bahn bewegt werden, wobei den Schlauchbeuteln innerhalb der Förderstrecke eine mit der Bewegungsrichtung des Förderbandes übereinstimmende Bewegungsrichtung mittels des Niederhalters aufgezwungen wird.

13. Verfahren nach Anspruch 12, **dadurch gekennzeichnet, dass** der Niederhalter kontinuierlich mit Druckluft betrieben wird.

14. Verfahren nach Anspruch 9 bis 13, **dadurch gekennzeichnet, dass** das optoelektronische Abtasten mittels Infrarotsensoren, mit sichtbaren Licht arbeitende Sensoren oder Laserensoren durchgeführt wird.

15. Verfahren nach Anspruch 9 bis 14, **dadurch gekennzeichnet, dass** die fehlerhaften Schlauchbeutel nach Verlassen der Beschleunigungsstrecke durch einen gezielten Luftdruckstoß aus ihrer Bahn abgelenkt und gesammelt werden.

16. Verfahren nach Anspruch 9 bis 15, **dadurch gekennzeichnet, dass** das Ausstoßorgan mit Druckluft betrieben wird.
